# EUROPÄISCHE PATENTSCHRIFT

(11) **EP 3 295 076 B1**
(45) Veröffentlichungstag und Bekanntmachung des Hinweises auf die Patenterteilung: **19.12.2018**
(21) Anmeldenummer: 16736763.0
(22) Anmeldetag: 06.05.2016
(51) Int. Cl.: F21S 41/29, F21S 41/255, F21S 41/16, F21V 17/02, F21V 14/06

(54) **BELEUCHTUNGSVORRICHTUNG MIT EINSTELLUNG DER OPTISCHEN BAUELEMENTE**
LIGHTING DEVICE WITH ADJUSTMENT OF THE OPTICAL ELEMENTS
DISPOSITIF D'ÉCLAIRAGE AVEC UN AJUSTAGE DES ÉLÉMENTS OPTIQUES

(30) Priorität: 13.05.2015 AT 504012015
(43) Veröffentlichungstag der Anmeldung: 21.03.2018
(73) Patentinhaber: ZKW Group GmbH, 3250 Wieselburg (AT)
(72) Erfinder: MAYER, Matthias, 3240 Mank (AT)
(74) Vertreter: Patentanwaltskanzlei Matschnig & Forsthuber OG
(86) Internationale Anmeldenummer: PCT/AT2016/050131
(87) Internationale Veröffentlichungsnummer: WO 2016/179620

(56) Entgegenhaltungen:
- WO-A1-2006/072885
- CN-U- 201 661 934
- DE-U1-202011 108 359
- US-A1- 2006 221 469
- US-A1- 2010 208 371

## Beschreibung

Die Erfindung betrifft eine Beleuchtungsvorrichtung, insbesondere für ein Kraftfahrzeug, mit zumindest einer Flächenlichtquelle und einer optischen Anordnung, mittels welcher von der zumindest einen Flächenlichtquelle emittiertes Licht in Form von zumindest einer Lichtverteilung abbildbar ist, wobei die optische Anordnung hinsichtlich einer Längsachse axial nacheinander zumindest ein erstes und ein zweites optisches Bauelement, deren Position axial verstellbar ist, - beispielsweise zwei in Axialrichtung verstellbare Linsen - umfasst.

Im Rahmen dieser Offenbarung bedeutet optisches Bauelement eine optische Komponente mit lichtsammelnden oder -streuenden Eigenschaften, und spezifischer einen Formreflektor (z.B. Hohl- oder Sammelspiegel) oder eine optische Linse, wobei auch Kombinationen aus diesen Komponenten eingeschlossen sein können. Unter Längsachse wird eine Achse verstanden entlang der die optischen Bauelemente angeordnet sind, wobei in den meisten Fällen die Hauptrichtung der Lichtausbreitung und die optische Achse mit dieser Längsachse zusammenfallen.

Der Einsatz von Laser-Lichtquellen in Kraftfahrzeugen, insbesondere für Scheinwerfer von Kraftfahrzeugen, gewinnt derzeit an Bedeutung, da Laserdioden flexiblere und effizientere Lösungen ermöglichen, wodurch auch die Leuchtdichte des Lichtbündels sowie die Lichtausbeute erheblich gesteigert werden kann.

Bei den bekannten Lösungen wird der Laserstrahl allerdings nicht direkt aus der Beleuchtungsvorrichtung bzw. dem Scheinwerfer emittiert, um eine Gefährdung der Augen von Menschen und anderen Lebewesen durch den extrem gebündelten Lichtstrahl hoher Leistung zu vermeiden. Der Laser-Strahl wird vielmehr auf ein zwischengeschaltetes Konversionselement gerichtet, das ein Material zur Luminenszenzkonversion, kurz "Phosphor" genannt, enthält und das Laserlicht, beispielsweise einer Wellenlänge im blauen Bereich, in sichtbares Licht, vorzugsweise weißes Licht, umwandelt; dieses sichtbare Licht wird dann nach außen gelenkt. Im Rahmen der vorliegenden Erfindung wird unter "Phosphor" ganz allgemein ein Stoff oder eine Stoffmischung verstanden, welche Licht einer Wellenlänge in Licht einer anderen Wellenlänge oder eines Wellenlängengemisches, insbesondere in "weißes" Licht, umwandelt, was auch unter dem Begriff "Wellenlängenkonversion" subsumierbar ist. Für das Konversionselement können auch Optokeramiken verwendet werden, das sind transparente Keramiken, wie beispielsweise YAG-Ce (ein Yttrium-Aluminium-Granat mit Cer dotiert). Auf diese Weise wird durch den Laser-Strahl auf dem flächigen Konversionselement ein Leuchtbild erzeugt und dieses Leuchtbild durch eine optische Anordnung, beispielsweise eine Abbildungsoptik mit Reflektoren und/oder vorzugsweise Linsen, als Lichtverteilung auf die Fahrbahn einer Straße projiziert.

Die Lichtquelle stellt in einem solchen System somit keine Punktlichtquelle dar, sondern ist ein flächiges Lichtbild, dessen Gestalt frei wählbar ist. Dem entsprechend ist die optische Anordnung dazu eingerichtet, von der flächigen Lichtquelle emittiertes Licht in Form von zumindest einer Lichtverteilung abzubilden. Hierbei ist eine möglichst scharfe Abbildung des Leuchtbildes, das auf dem Konversionselement erzeugt wird, auf die Straße / Fahrbahn erwünscht, damit eine optimale Wirkung des so projizierten Leuchtbildes erreicht werden kann. Durch Abweichungen und Toleranzen der optischen Bauelemente, der zugehörenden Fassungen (Halterungen) und nicht zuletzt auch der Position des Phosphors kommt es jedoch häufig dazu, dass die Lichtverteilung nicht ausreichend scharf dargestellt wird.

In WO 2006/072885 A1 ist eine einstellbare Beleuchtungseinrichtung mit zwei optischen Elementen beschrieben, deren Abstand durch eine Drehung der Halterung eines optischen Elements um die Längsachse einstellbar ist; jedoch ist darin ein Einstellen beider optischen Elemente gegenüber der Lichtquelle nicht offenbart.

Es ist ein Ziel der Erfindung, eine genaue und zugleich unkomplizierte Justierung der Komponenten der Abbildungsoptik zu ermöglichen. Insbesondere ist bei einem Abbildungssystem mit zwei Linsen (oder allgemeiner mit zwei optischen Bauelementen) ein genaues Einstellen der Linsen nicht nur in Bezug auf den Phosphor, sondern auch zueinander zu ermöglichen.

Diese Aufgabe wird von einer Beleuchtungsvorrichtung der eingangs genannten Art mithilfe einer Einstellvorrichtung der optischen Bauelemente gelöst, mit einem um die Längsachse drehbaren ersten Stellring, der mit einem Ansatzstück über eine Getriebeverbindung verbunden ist, die eine Drehung des ersten Stellrings gegenüber dem Ansatzstück in eine axiale Verschiebung umsetzt; hierbei ist eine Halterung des ersten optischen Bauelements mithilfe einer Federung gegen den ersten Stellring axial gehalten und gegenüber dem Ansatzstück axial verstellbar, und das zweite optische Bauelement ist in einer zu dem Ansatzstück axial festgelegten Halterung gehalten. Vorzugsweise können alle oder zumindest eines der optischen Bauelemente als optische Linsen ausgebildet sein.

Durch diese Lösung wird die Getriebeverbindung zwischen erstem Stellring und dem Ansatzstück eine Drehbewegung des ersten Stellrings in eine Lageänderung des ersten optischen Bauelements (der ersten Linse) relativ zu dem zweiten optischen Bauelement (der zweiten Linse) entlang der Längsachse umgesetzt. Dies ergibt das genannte Ziel der Erfindung auf einfache und dennoch effektive Weise. Die lichttechnisch äußerst wichtige, aber gegenüber Abweichungen empfindliche Ausrichtung der Abbildungsoptik zum Phosphor kann somit einfach und schnell eingestellt bzw. korrigiert werden. Die Erfindung ermöglicht eine schnelle, einfache und genaue Fokussierung des Lichtbilds und gestattet die Montage der optischen Komponenten in einem Konvertermodul, das nachträglich justiert werden kann. Die Erfindung kann bei sämtlichen Anwendungen von Laserlichtmodulen (Abblendlicht, Fernlicht, usw.) zum Einsatz kommen und eignet sich auch für Module, in denen mehrere Laserquellen zum Einsatz kommen.

Eine einfache und zweckmäßige Ausgestaltung des Einstellens am ersten Stellring kann beispielsweise darin bestehen, dass der erste Stellring ein Gewinde - vorzugsweise Innengewinde - aufweist, das mit einem Gegengewinde des Ansatzstücks zusammenwirkt, und der erste Stellring zudem einen vorzugsweise als ringförmige Stirnfläche ausgebildete Anschlagsfläche aufweist, gegen die die Halterung des ersten optischen Bauelements axial gelagert ist.

Um auch ein Einstellen der Position beider optischen Bauelemente gemeinsam zu erreichen, ist es vorteilhaft, wenn zudem die Einstellvorrichtung einen um die Längsachse drehbaren zweiten Stellring aufweist, der mit einem Trägerteil über eine Getriebeverbindung verbunden ist, die eine Drehung des zweiten Stellrings gegenüber dem Trägerteil in eine Verschiebung in axialer Richtung umsetzt. Hierbei kann zusätzlich die Halterung des zweiten optischen Bauelements mithilfe einer Federung gegen den zweiten Stellring gehalten und gegenüber dem Trägerteil axial verstellbar sein. Dies gestattet eine zusätzliche Einstellmöglichkeit, typischer Weise der relativen Position in Bezug auf den Phosphor. Dies trägt zu den oben genannten Vorteilen bei, insbesondere hinsichtlich der schnellen, einfachen und genauen Fokussierung des Lichtbilds sowie der Montage der optischen Komponenten in einem nachträglich justierbaren Konvertermodul.

Auch für das Einstellen am zweiten Stellring kann eine einfache und zweckmäßige Ausgestaltung darin bestehen, dass beispielsweise der zweite Stellring ein Gewinde - vorzugsweise ein Innengewinde - aufweist, das mit einem Gegengewinde des Trägerteils zusammenwirkt, und der zweite Stellring zudem einen vorzugsweise als ringförmige Stirnfläche ausgebildete Anschlagsfläche aufweist, gegen die die Halterung des zweiten optischen Bauelements axial gelagert ist.

In einer vorteilhafte Weiterbildung der Erfindung kann das Trägerteil so gestaltet sein, dass es den ersten Stellring hülsenartig umgibt und zumindest ein Fenster aufweist, durch das der Stellring von außen her zugänglich ist. Dies ergibt eine einfache Bauweise, wobei zusätzlich der erste Stellring durch das hülsenartige Trägerteil geschützt wird.

In einer günstigen Ausgestaltung der Erfindung hinsichtlich des Zusammenhang zwischen der Halterung des zweiten optischen Bauelements mit dem Ansatzstück können diese beiden Komponenten (nämlich Halterung und Ansatzstück) einstückig ausgebildet sein. Alternativ ist es auch möglich, dass die Halterung des zweiten optischen Bauelements mit dem Ansatzstück durch eine Drehkoppelung verbunden ist, welche zumindest eine Relativbewegung zwischen dieser Halterung und dem Ansatzstück entlang der Längsachse unterbindet.

Weiters kann es zum verbesserten Schutz der optischen Komponenten vor Einwirkung von außen vorteilhaft sein, wenn die Halterung des zweiten optischen Bauelements und/oder das Ansatzstück einen Raum der Lichtausbreitung zwischen den beiden optischen Bauelementen hülsenartig umgibt.

Die Erfindung eignet sich im Besonderen für Beleuchtungsvorrichtungen mit Laser-Lichtquellen, z.B. in Laser-Scheinwerfern. Eine derartige Laser-basierte Beleuchtungsvorrichtung kann zusätzlich umfassen:
- zumindest eine Laser-Lichtquelle zur Erzeugung von Laser-Anregungslicht, und
- zumindest eine Strahlumlenkeinrichtung, welche dazu eingerichtet, von der zumindest einen Laser-Lichtquelle erzeugtes Laser-Anregungslicht auf die zumindest eine Flächenlichtquelle zu richten;
wobei die zumindest eine Flächenlichtquelle als Konversionselement ausgebildet ist, welches bei Bestrahlung mit Laser-Anregungslicht in Richtung zur Licht, vorzugsweise im sichtbaren Wellenlängenbereich, emittiert, welches Licht durch besagte optische Anordnung der Beleuchtungsvorrichtung abgebildet wird.

Die beschriebene erfindungsgemäße Lösung eignet sich im Besonderen für einen Kraftfahrzeugscheinwerfer mit einer oder mehreren Beleuchtungsvorrichtungen der hier beschriebenen Art. Besonders bei hochauflösenden Lichtverteilungen ist eine Einstellung der Fokussierungseigenschaften für das auf die Fahrbahn projizierten Licht notwendig; jedoch ist aufgrund der unvermeidlichen Montageabweichungen und -toleranzen ein hochgenaues Definieren der Fokussierung nur nachträglich möglich und verlangt somit ein nachträgliche Einstellungsmöglichkeit.

Die Erfindung samt weiteren Einzelheiten und Vorzüge wird im Folgenden anhand eines beispielhaften und nicht einschränkenden Ausführungsform der Erfindung näher erläutert, welche in den beigefügten Zeichnungen dargestellt ist. Diese zeigen in schematischer Form:
- Fig. 1: eine Übersicht des Strahlengangs in einem Laserscheinwerfer;
- Fig. 2: eine perspektivische Ansicht der Fokussieranordnung des Ausführungsbeispiels;
- Fig. 3: die Fokussieranordnung der Fig. 2 in einem Längsschnitt;
- Fig. 4: einen Querschnitt der Fokussieranordnung entlang der Schnittebene 4-4 in Fig. 3; und
- Fig. 5: einen Querschnitt der Fokussieranordnung entlang der Schnittebene 5-5 in Fig. 3.

Das im Folgenden gezeigte Ausführungsbeispiel betrifft einen Laserscheinwerfer für ein Kraftfahrzeug. Darin sind die optischen Bauelemente als Linsen verwirklicht, jedoch können in anderen Ausführungsformen der Erfindung einzelne oder alle optischen Bauelemente ebenso als Reflektoren ausgebildet sein, beispielsweise als Hohl- oder Wölbspiegel.

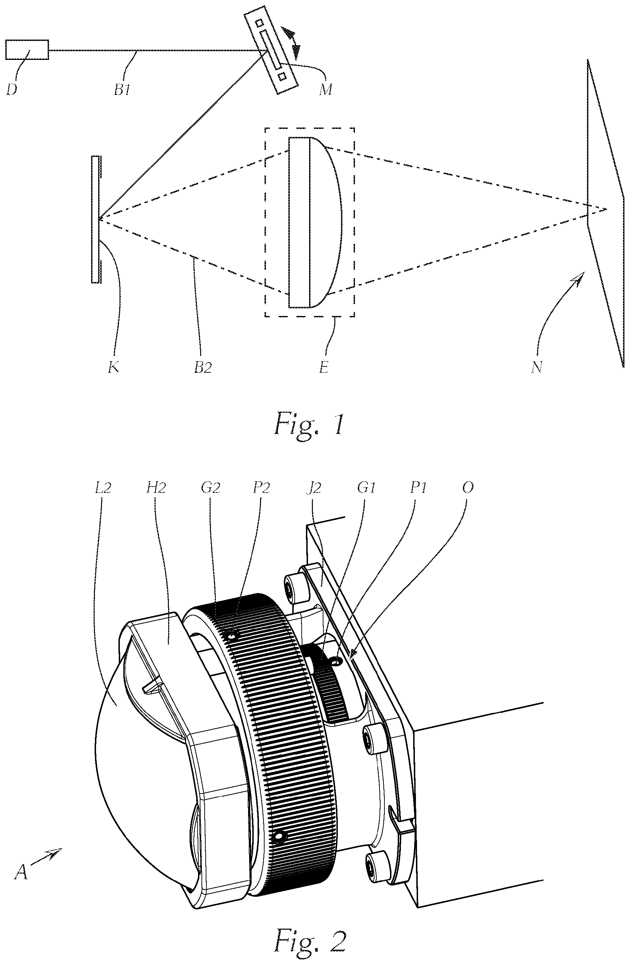

In Fig. 1 ist eine Übersicht des Strahlengangs in einer zu einem Scheinwerfer gehörenden Beleuchtungsvorrichtung gezeigt. Eine Laser-Lichtquelle D emittiert einen Laser-Strahl B1, beispielsweise im blauen oder ultravioletten Spektralbereich. Der Laser-Strahl B1 wird mithilfe eines schwenkbaren Spiegels M als Anregungslicht auf einen Phosphor K gerichtet. Der Spiegel M dient als Strahlumlenkeinrichtung und ist bevorzugt um zwei Achsen schwenkbar. Der Phosphor K sendet aufgrund des einfallenden Laser-Lichts nach bekannter Art durch Lumineszenzkonversion sichtbares Licht B2 aus, vorzugsweise weißes Licht. Durch die rasche Bewegung des Spiegels M "wandert" der vom Laserstrahl B1 erzeugte Lichtpunkt auf dem flächigen Konversionselement und erzeugt somit ein Leuchtbild; dieses Leuchtbild wird durch eine optische Anordnung E, die in Fig. 1 nur symbolisch dargestellt ist und beispielsweise eine Abbildungsoptik mit zwei oder mehr Linsen sein kann, auf die Fahrbahn projiziert. Somit wird mithilfe des Spiegels M ein gewünschtes Lichtbild auf dem Phosphor K gezeichnet, das durch die optische Anordnung E auf die Fahrbahn abgebildet wird und dort eine Lichtverteilung N erzeugt. Mit "gezeichnet" sei insbesondere ein scannender Vorgang gemeint, bei dem der Laserstrahl B1 über den Spiegel M derart schnell, beispielsweise zeilenweise oder sinusförmig - als Lissajou-Figur - abgelenkt wird, so dass für das menschliche Auge der Eindruck einer einheitlich leuchtenden Fläche entsteht, das als Lichtbild über eine Abbildungsoptik auf die Straße projiziert werden kann. In Fig. 1 ist der Strahlengang am Phosphor reflektierend dargestellt, wobei mit dem konvertierten Licht B2 gearbeitet wird, das sich auf derselben Seite des Phoshors wie das Laserlicht B1 ausbreitet, jedoch kann der Strahlengang auch transmissiv sein, d.h. das genutzte Licht B2 und die zugehörende Optik E liegen bezüglich des Phosphors auf der Seite gegenüber dem einfallenden Laser-Strahl B1.

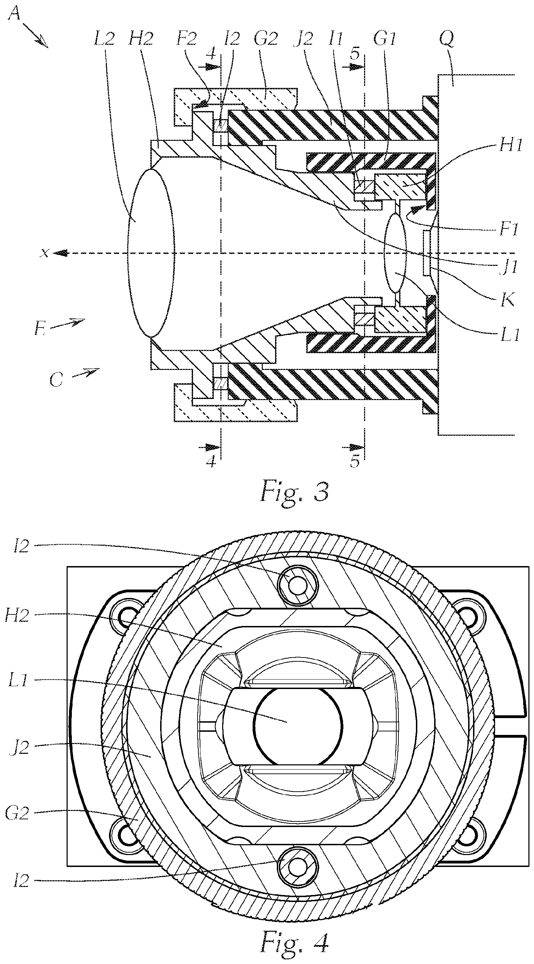

In den Fig. 2 und 3 ist eine Beleuchtungsvorrichtung A mit am Phosphor transmissivem Strahlengang gezeigt, deren optische Anordnung mit einer erfindungsgemäßen Einstellvorrichtung C ausgestattet ist. Dank dieser Einstellvorrichtung C können die Linsen L1, L2 der optischen Anordnung zueinander und in Bezug auf das Konversionselement (Phosphor) K eingestellt und somit eine äußerst scharfe Abbildung des Leuchtbildes auf dem Konversionselement in eine letztendlich gewünschte Lichtverteilung N auf der Straße erreicht werden.

Die erste Linse L1 ist in einer Halterung (Linsenhalter) H1 gehalten. Die Halterung H1 liegt einer Anschlagsfläche F1 eines Stellrings G1, z.B. einer inneren Stirnfläche, an und wird von der anderen Seite her durch eine Federung I1 angepresst, die sich gegen ein Ansatzstück J1 abstützt, das die gesamten Baugruppe (Stellring G1, Halterung H1 und Federung I1) der ersten Linse L1 trägt. Die Federung I1 kann beispielsweise durch zwei Gummifedern verwirklicht sein, die einander bezüglich der Längsachse x gegenüber liegen. Durch die Spannkraft der Federung I1 wird die Halterung gegen die Stirnfläche F1 gehalten und befindet sich so spielfrei in einer definierten Position relativ zum Ansatzstück J1.

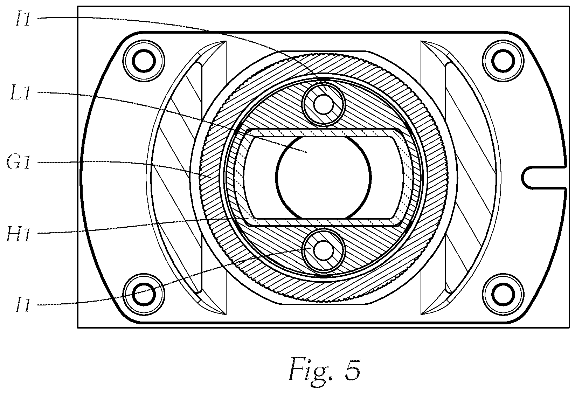

Der Stellring G1 ist über eine Gewindeverbindung mit dem Ansatzstück J1 verbunden, hier beispielsweise über ein Innengewinde des Stellrings G1 mit einem Außengewinde des Ansatzstücks J1. Das Ansatzstück J1 trägt somit die Linse L1 und die zugehörende Einstelleinrichtung der Linse. Mittels der Getriebeverbindung lässt sich eine Drehung des Stellrings G1 um die Längsachse x gegenüber dem Ansatzstück J1 in eine axiale Verschiebung des Stellrings und somit der darin gelagerten Linsenhalterung und Linse L1 umsetzen. Dank der Formgebung der Halterung H1 (Fig. 5), nämlich in Längsrichtung gesehen mit z.B. geraden Flächen, die einer Drehung der Halterung entgegenwirken, ergibt sich eine Verdrehsicherung, somit wird die Linse L1 nicht mitgedreht, sondern bewegt sich ausschließlich in der Längsrichtung x.

Das Ansatzstück J1 ist im gezeigten Ausführungsbeispiel mit der Halterung H2 der zweiten Linse L2 starr verbunden, vorzugsweise mit dieser einstückig; in einer Variante reicht eine Verbindung aus, die eine in Axialrichtung festgelegte Position des Ansatzstücks zur Halterung H2 definiert, aber eine Drehung um die Längsachse gestattet.

Somit bewirkt eine Einstellbewegung des Stellrings G1 durch Verdrehen desselben eine Änderung des Abstands der beiden Linsen L1, L2 zueinander, wodurch ein genaues Einstellen der relativen Position der beiden Linsen erzielt wird.

Für das Verstellen der zweiten Linse L2 in deren Halterung (Linsenhalter) H2 sowie der Baugruppe der ersten Linse L1 ist ein zweiter Stellring G2 vorgesehen. Die Halterung H2 weist beispielsweise eine radial vorstehende Ringleiste auf, die mit einer Anschlagsfläche F2 - z.B. einer inneren Stirnfläche - des Stellrings G2 zusammenwirkt; gegen diese Anschlagsfläche F2 wird sie durch eine Federung I2 gegen die Stirnfläche angedrückt. Die Federung I2 stützt sich an einer Stirnfläche eines Trägerteils J2 ab. Das Trägerteil J2 ist als hülsenfömiger Adapter ausgebildet, der die gesamte Baugruppe (Stellring G2, Halterung H2 und Federung I2) der zweiten Linse L1 einschließlich der daran gehaltenen Baugruppe der ersten Linse L1 trägt. Auch die Federung I2 kann beispielsweise durch zwei Gummifedern verwirklicht sein, die einander bezüglich der Längsachse x gegenüber liegen.

Durch die Spannkraft der Federung I2 wird die Halterung H2 gegen die Stirnfläche F2 gehalten und befindet sich so spielfrei in einer definierten Position relativ zum Adapter J2, der an dem Gehäuse Q der Beleuchtungsvorrichtung A angebracht ist und dort den Bereich umgibt, in dem der Phosphor K sich befindet.

Der Stellring G2 ist über eine Gewindeverbindung mit dem Adapter J2 verbunden, z.B. über ein Innengewinde des Stellrings G2 mit einem Außengewinde des Adapters J2. Mittels der Getriebeverbindung lässt sich eine Drehung des Stellrings G2 um die Längsachse x gegenüber dem Adapter J2 in eine axiale Verschiebung des Stellrings und somit der daran gelagerten Halterung H2 samt und Linse L2 umsetzen. Auch hier ist die Halterung H2 - vgl. Fig. 4 - für eine Verdrehsicherung geformt, nämlich in Längsrichtung gesehen mit z.B. geraden Flächen; somit wird die zweite Linse L2 und die Baugruppe der ersten Linse L1 nicht mitgedreht, sondern bewegt sich ausschließlich in der Längsrichtung x.

Somit bewirkt eine Einstellbewegung des Stellrings G2 durch Verdrehen desselben eine Änderung des Abstands der optischen Anordnung E zum Phosphor K. In Kombination mit der Einstellbewegung des Stellrings G1 ist somit ein genaues Einstellen der Position der beiden Linsen zum Phosphor K möglich. In dem Adapter J2 ist hierfür zumindest ein Fenster O vorgesehen (Fig. 2), durch das der Stellring G1 zugänglich ist.

Die gezeigte Ausführungsform ist für ein manuelles Einstellen der beiden Stellringe G1, G2 ausgelegt. Nachdem die optische Anordnung E auf eine Fokussierung eingestellt worden ist, können die Stellringe G1, G2 in der Einstellposition fixiert werden, beispielsweise durch Fixierschrauben (nicht gezeigt), die in hierfür vorgesehenen radialen Gewindebohrungen P1, P2 eingesetzt werden. Anstelle eines manuellen Betätigens kann auch vorgesehen sein, dass einer oder beide Stellringe durch eine gesteuerte Stelleinrichtung eingestellt werden.

Die Erfindung ermöglicht eine schnelle, einfache und genaue Einstellung (Fokussierung) der Lichtverteilung in einem fertig montierten Lasermodul. Dadurch können sowohl die Mittel zum Einstellen der Beleuchtungsvorrichtung und die zugehörende Prüfvorrichtung einfacher ausgeführt werden. Ein weiterer Vorteil ergibt sich dadurch, dass die Erfindung den optischen Bauelementen einen großen Einstellbereich verleiht, beispielsweise in der Größenordnung von mehreren Millimetern, z.B. ±1,5 mm. Durch die Vorspannung der Halterungen mittels Federn oder ähnlichen federnden Komponenten ist eine stabile und definierte Position bis zur dauerhaften Fixierung gegeben.

## Patentansprüche

1. Beleuchtungsvorrichtung (A), insbesondere für ein Kraftfahrzeug, umfassend zumindest eine Flächenlichtquelle (K) und eine optische Anordnung (E), mittels welcher von der zumindest einen Flächenlichtquelle (K) emittiertes Licht (B2) in Form von zumindest einer Lichtverteilung (N) abbildbar ist, wobei die optische Anordnung (E) hinsichtlich einer Längsachse (x) axial nacheinander zumindest ein erstes und ein zweites optisches Bauelement (L1, L2) umfasst, deren Position axial verstellbar ist,
worin eine Einstellvorrichtung (C) der optischen Bauelemente (L1, L2) einen um die Längsachse (x) drehbaren ersten Stellring (G1) aufweist, der mit einem Ansatzstück (J1) über eine Getriebeverbindung verbunden ist, die eine Drehung des ersten Stellrings (G1) gegenüber dem Ansatzstück (J1) in eine axiale Verschiebung umsetzt,
**dadurch gekennzeichnet, dass**
eine Halterung (H1) des ersten optischen Bauelements (L1) mithilfe einer Federung (I1) gegen den ersten Stellring (G1) axial gehalten und gegenüber dem Ansatzstück (J1) axial verstellbar ist, und
wobei das zweite optische Bauelement (L2) in einer zu dem Ansatzstück (J1) axial festgelegten Halterung (H2) gehalten ist.

2. Beleuchtungsvorrichtung (A) nach Anspruch 1, **dadurch gekennzeichnet, dass** zudem die Einstellvorrichtung einen um die Längsachse (x) drehbaren zweiten Stellring (G2) aufweist, der mit einem Trägerteil (J2) über eine Getriebeverbindung verbunden ist, die eine Drehung des zweiten Stellrings (G2) gegenüber dem Trägerteil (J2) in eine Verschiebung in axialer Richtung umsetzt, und
die Halterung (H2) des zweiten optischen Bauelements (L2) mithilfe einer Federung (I2) gegen den zweiten Stellring (G2) gehalten und gegenüber dem Trägerteil (J2) axial verstellbar ist.

3. Beleuchtungsvorrichtung (A) nach Anspruch 2, **dadurch gekennzeichnet, dass** der zweite Stellring (G2) ein Gewinde, vorzugsweise Innengewinde, aufweist, das mit einem Gegengewinde des Trägerteils (J2) zusammenwirkt, und der zweite Stellring (G2) zudem eine vorzugsweise als ringförmige Stirnfläche ausgebildete Anschlagsfläche (F2) aufweist, gegen die die Halterung (H2) des zweiten optischen Bauelements (L2) axial gelagert ist.

4. Beleuchtungsvorrichtung (A) nach Anspruch 2 oder 3, **dadurch gekennzeichnet, dass** das Trägerteil (J2) den ersten Stellring (G1) hülsenartig umgibt und zumindest ein Fenster (O) aufweist, durch das der Stellring (G1) von außen her zugänglich ist.

5. Beleuchtungsvorrichtung (A) nach einem der vorhergehenden Ansprüche, **dadurch gekennzeichnet, dass** der erste Stellring (G1) ein Gewinde, vorzugsweise Innengewinde, aufweist, das mit einem Gegengewinde des Ansatzstücks (J1) zusammenwirkt, und der erste Stellring (G1) zudem eine vorzugsweise als ringförmige Stirnfläche ausgebildete Anschlagsfläche (F1) aufweist, gegen die die Halterung (H1) des ersten optischen Bauelements (L1) axial gelagert ist.

6. Beleuchtungsvorrichtung (A) nach einem der vorhergehenden Ansprüche, **dadurch gekennzeichnet, dass** die Halterung (H2) des zweiten optischen Bauelements (L2) mit dem Ansatzstück (J1) einstückig ist.

7. Beleuchtungsvorrichtung (A) nach einem der Ansprüche 1 bis 5, **dadurch gekennzeichnet, dass** die Halterung (H2) des zweiten optischen Bauelements (L2) mit dem Ansatzstück (J1) durch eine Drehkoppelung verbunden ist, welche zumindest eine Relativbewegung zwischen dieser Halterung (H2) und dem Ansatzstück (J1) entlang der Längsachse (x) unterbindet.

8. Beleuchtungsvorrichtung (A) nach einem der vorhergehenden Ansprüche, **dadurch gekennzeichnet, dass** die Halterung (H2) des zweiten optischen Bauelements (L2) und/oder das Ansatzstück (J1) einen Raum der Lichtausbreitung zwischen den beiden optischen Bauelementen (L1, L2) hülsenartig umgibt.

9. Beleuchtungsvorrichtung (A) nach einem der vorhergehenden Ansprüche, **dadurch gekennzeichnet, dass** zumindest eines der optischen Bauelemente (L1, L2), bevorzugt alle optischen Bauelemente, als optische Linsen ausgebildet sind.

10. Beleuchtungsvorrichtung (A) nach einem der vorhergehenden Ansprüche, **dadurch gekennzeichnet, dass** sie zusätzlich umfasst:
- zumindest eine Laser-Lichtquelle (D) zur Erzeugung von Laser-Anregungslicht (B1), und
- zumindest eine Strahlumlenkeinrichtung (M), welche dazu eingerichtet, von der zumindest einen Laser-Lichtquelle (D) erzeugtes Laser-Anregungslicht (B1) auf die zumindest eine Flächenlichtquelle (K) zu richten;
wobei die zumindest eine Flächenlichtquelle (K) als Konversionselement ausgebildet ist, welches bei Bestrahlung mit Laser-Anregungslicht (B1) in Richtung zur optischen Anordnung (E) Licht (B2), vorzugsweise im sichtbaren Wellenlängenbereich, emittiert.

11. Kraftfahrzeugscheinwerfer mit einer oder mehreren Beleuchtungsvorrichtungen (A) nach einem der vorhergehenden Ansprüche.

## Claims

1. Lighting device (A), in particular for a motor vehicle, comprising at least one areal light source (K) and an optical assembly (E) by means of which light (B2) emitted by the at least one areal light source (K) can be projected in the form of at least one beam pattern (N), wherein the optical assembly (E) comprises at least a first and a second optical element (L1, L2) which are arranged axially one behind the other relative to a longitudinal axis (x) and of which the positions are displaceable axially,
in which an adjustment device (C) for the optical elements (L1, L2) includes a first adjusting ring (G1) which is rotatable about the longitudinal axis (x), and which is connected to an attachment member (J1) via a geared connection to convert a rotation of the first adjusting ring (G1) relative to the attachment member (J1) into an axial displacement,
**characterized in that**
a mount (H1) of the first optical element (L1) is retained axially against the first adjusting ring (G1) with the aid of a spring system (I1) and is axially adjustable with respect to the attachment member (J1), and
wherein the second optical element (L2) is retained in a mount (H2) which is axially constrained to the attachment member (J1).

2. Lighting device (A) according to claim 1, **characterized in that** the adjustment device further comprises a second adjusting ring (G2) which is rotatable about the longitudinal axis (x) and which is connected to a carrier member (J2) via a geared connection, which connection converts a rotation of the second adjusting ring (G2) relative to the carrier member (J2) into a displacement in the axial direction, and
the mount (H2) of the second optical element (L2) is retained against the second adjusting ring (G2) with the aid of a spring system (12) and is axially adjustable with respect to the carrier member (J2).

3. Lighting device (A) according to claim 2, **characterized in that** the second adjusting ring (G2) comprises a thread, preferably internal thread, which cooperates with a corresponding thread in the carrier member (J2), and the second adjusting ring (G2) further comprises a stop surface (F2), preferably realized as annular front face, to axially support the mount (H2) of the second optical element (L2).

4. Lighting device (A) according to claim 2 or 3, **characterized in that** the carrier member (J2) surrounds the first adjusting ring (G1) in the manner of a sleeve and comprises at least one window (0) through which the adjusting ring (G1) is accessible from the outside.

5. Lighting device (A) according to any one of the preceding claims, **characterized in that** the first adjusting ring (G1) comprises a thread, preferably internal thread, which cooperates with a corresponding thread in the attachment member (J1), and the first adjusting ring (G1) further comprises a stop surface (F1), preferably realized as annular front face, to axially support the mount (H1) of the first optical element (L1).

6. Lighting device (A) according to any one of the preceding claims, **characterized in that** the mount (H2) of the second optical element (L2) is realized as a single part with the attachment member (J1).

7. Lighting device (A) according to any one claims 1 to 5, **characterized in that** the mount (H2) of the second optical element (L2) is connected to the attachment member (J1) by a rotating joint which prevents at least a relative movement between said mount (H2) and the attachment member (J1) along the longitudinal axis (x).

8. Lighting device (A) according to any one of the preceding claims, **characterized in that** at least one of the mount (H2) of the second optical element (L2) and the attachment member (J1) encloses a space for light propagation between the two optical elements (L1, L2) in the manner of a sleeve.

9. Lighting device (A) according to any one of the preceding claims, **characterized in that** at least one of the optical elements (L1, L2), preferably all optical elements, are embodied as optical lenses.

10. Lighting device (A) according to any one of the preceding claims, **characterized in that** it further comprises:
- at least one laser light source (D) for generating laser excitation light (B1), and
- at least one beam deflection device (M), configured to direct laser excitation light (B1) generated by the at least one laser light source (D) towards the at least one areal light source;
wherein the at least one areal light source (K) is realized as conversion element which upon irradiation with laser excitation light (B1) emits light (B2), preferably in the visible wavelength range, in a direction towards the optical assembly (E).

11. Motor vehicle headlamp comprising one or more lighting devices (A) according to any one of the preceding claims.

## Revendications

1. Dispositif d'éclairage (A), en particulier pour un véhicule automobile, comportant au moins une source de lumière de surface (K) et un agencement optique (E), au moyen duquel une lumière (B2) émise par ladite au moins une source de lumière de surface (K) est apte à être reproduite sous la forme d'au moins une distribution de lumière (N), l'agencement optique (E) comportant au moins un premier et un second composant optique (L1, L2) disposés axialement les uns à la suite des autres par rapport à un axe longitudinal (x), dont la position est réglable axialement,
dans lequel un dispositif de réglage (C) des composants optiques (L1, L2) présente une première bague de réglage (G1) apte à tourner autour de l'axe longitudinal (x), qui est reliée à une pièce d'extension (J1) par l'intermédiaire d'une liaison de transmission, qui convertit une rotation de la première bague de réglage (G1) par rapport à la pièce d'extension (J1) en un déplacement axial,
**caractérisé par le fait que**
un support (H1) du premier composant optique (L1), à l'aide d'un organe à ressort (I1), est maintenu axialement contre la première bague de réglage (G1) et réglable axialement par rapport à la pièce d'extension (J1), et
le second composant optique (L2) étant maintenu dans un support (H2) fixé axialement à la pièce d'extension (J1).

2. Dispositif d'éclairage (A) selon la revendication 1, **caractérisé par le fait que** le dispositif de réglage présente en outre une seconde bague de réglage (G2) apte à tourner autour de l'axe longitudinal (x), qui est reliée à un élément support (J2) par l'intermédiaire d'une liaison de transmission, qui convertit une rotation de la seconde bague de réglage (G2) par rapport à l'élément support (J2) en un déplacement dans la direction axiale, et
le support (H2) du second composant optique (L2) est maintenu à l'aide d'un organe à ressort (I2) contre la seconde bague de réglage (G2) et est réglable axialement par rapport à l'élément support (J2).

3. Dispositif d'éclairage (A) selon la revendication 2, **caractérisé par le fait que** la seconde bague de réglage (G2) présente un filetage, de préférence un filetage interne, qui coopère avec un filetage correspondant de l'élément support (J2), et la seconde bague de réglage (G2) présente en outre une surface de butée (F2) conçue de préférence en tant que surface frontale annulaire, contre laquelle le support (H2) du second composant optique (L2) est monté axialement.

4. Dispositif d'éclairage (A) selon l'une des revendications 2 ou 3, **caractérisé par le fait que** l'élément support (J2) entoure la première bague de réglage (G1) à la manière d'un manchon et présente au moins une fenêtre (0), à travers laquelle la bague de réglage (G1) est accessible depuis l'extérieur.

5. Dispositif d'éclairage (A) selon l'une des revendications précédentes, **caractérisé par le fait que** la première bague de réglage (G1) présente un filetage, de préférence un filetage interne, qui coopère avec un filetage correspondant de la pièce d'extension (J1), et la première bague de réglage (G1) présente en outre une surface de butée (F1) conçue de préférence en tant que surface frontale annulaire, contre laquelle le support (H1) du premier composant optique (L1) est monté axialement.

6. Dispositif d'éclairage (A) selon l'une des revendications précédentes, **caractérisé par le fait que** le support (H2) du second composant optique (L2) est d'un seul tenant avec la pièce d'extension (J1).

7. Dispositif d'éclairage (A) selon l'une des revendications 1 à 5, **caractérisé par le fait que** le support (H2) du second composant optique (L2) est relié à la pièce d'extension (J1) par un couplage rotatif, qui empêche au moins un déplacement relatif entre ce support (H2) et la pièce d'extension (J1) le long de l'axe longitudinal (x).

8. Dispositif d'éclairage (A) selon l'une des revendications précédentes, **caractérisé par le fait que** le support (H2) du second composant optique (L2) et/ou la pièce d'extension (J1) entourent à la manière d'un manchon un espace de la propagation de lumière entre les deux composants optiques (L1, L2) .

9. Dispositif d'éclairage (A) selon l'une des revendications précédentes, **caractérisé par le fait qu'**au moins l'un des composants optiques (L1, L2), de préférence tous les composants optiques, sont réalisés en tant que lentilles optiques.

10. Dispositif d'éclairage (A) selon l'une des revendications précédentes, **caractérisé par le fait qu'**il comporte en outre :
- au moins une source de lumière laser (D) pour la génération d'une lumière d'excitation laser (B1) ; et
- au moins un dispositif de redirection de faisceau (M), qui est conçu pour diriger une lumière d'excitation laser (B1) générée par ladite au moins une source de lumière laser (D) sur ladite au moins une source de lumière de surface (K) ;
dans lequel ladite au moins une source de lumière de surface (K) est réalisée en tant qu'élément de conversion, qui émet de la lumière (B2), lors de l'irradiation avec la lumière d'excitation laser (B1), de préférence dans la plage des longueurs d'onde du visible, en direction de l'agencement optique (E).

11. Phare de véhicule automobile comportant un ou plusieurs dispositifs d'éclairage (A) selon l'une des revendications précédentes.
